(19) **Europäisches Patentamt**
**European Patent Office**
**Office européen des brevets**

(11) **EP 3 647 439 B1**

(12) **EUROPEAN PATENT SPECIFICATION**

(45) Date of publication and mention
of the grant of the patent:
**08.09.2021 Bulletin 2021/36**

(51) Int Cl.:
*C13B 30/00* (2011.01)       *C13B 25/00* (2011.01)
*B01D 1/26* (2006.01)

(21) Application number: **19206277.6**

(22) Date of filing: **30.10.2019**

(54) **PROCESS FOR THE MANUFACTURE OF THICK JUICE**

VERFAHREN ZUR HERSTELLUNG VON DICKSAFT

PROCÉDÉ DE FABRICATION DE JUS ÉPAIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2018 NL 2021902**

(43) Date of publication of application:
**06.05.2020 Bulletin 2020/19**

(73) Proprietor: **Coöperatie Koninklijke Cosun U.A.
4814 NE Breda (NL)**

(72) Inventors:
• **van Dijk, Marcus Adrianus Wilhelmus
4671 VA Dinteloord (NL)**
• **de Haan, André Banier
4671 VA Dinteloord (NL)**
• **Muller, Adriaan Leendert Cornelis
4849 BK Dorst (NL)**

(74) Representative: **Nederlandsch Octrooibureau
P.O. Box 29720
2502 LS The Hague (NL)**

(56) References cited:
**EP-A1- 1 767 257          WO-A2-2014/016853
US-A- 4 119 436          US-A- 4 290 818
US-A- 4 530 737          US-A1- 2005 260 313
US-A1- 2010 304 004      US-A1- 2011 232 343
US-A1- 2015 211 081**

## Description

## FIELD OF THE INVENTION

The present invention concerns a process for the manufacture of thick juice, as part of a sugar manufacturing process, by evaporative concentration of thin juice of sugar beet, sugar cane, or combinations thereof, using multiple-effect evaporation and thermal vapour recompression.

## BACKGROUND OF THE INVENTION

The present invention concerns the evaporative concentration of thin juice to thick juice having a specific Brix value (°Bx) in a sugar manufacturing process from sugar beet and/or sugar cane. As will be understood by the person skilled in the art, this evaporative concentration step is a single step in a series of steps required to produce sugar. A juice comprising dissolved sugar may be extracted from raw comminuted (e.g. sliced) sugar beet or milled from sugar cane. A so-called thin juice may be obtained by purification of the juice comprising dissolved sugar. After evaporative concentration of the thin juice to thick juice, sugar crystals are usually obtained through crystallization and separation. However, the thick juice may also be used for other purposes if desired.

All of the above-described processes require energy. As will be explained below, the process of evaporative concentration results in steam or vapours that can be used in other parts of the sugar manufacturing process. Vapours may be obtained by either bleeding intermediate vapours of the evaporator steps or by using the vapours from the preceding evaporator. If the energy of the steam, or of the vapour resulting from evaporative concentration, exceeds the energy demands of other process steps, the surplus of the steam or vapour is condensed and the energy is released to the environment, in the form of heat. This heat release to the environment is called condenser loss. It refers to the energy of the steam resulting from evaporative concentration of thin juice that cannot be used in other parts of the sugar manufacturing process and which is released as heat to the environment. The vapours being condensed are typically the vapours from the last evaporator in the chain.

In state of the art sugar manufacturing processes, evaporative concentration takes place in multiple-effect evaporators. In a multiple-effect evaporator, energy from steam is used efficiently to evaporate water in multiple evaporators connected in series. Each subsequent evaporator in the series is operated at a lower pressure such that the boiling point of the water to be evaporated decreases in subsequent evaporators. In this way, the water vapour resulting from evaporation in an evaporator can be used in the heating element of another evaporator to concentrate the juice in said other evaporator. Only the first evaporator requires external energy.

The evaporators may be arranged in forward feed arrangement which means that the evaporators are arranged from low-to-high Brix and from high-to-low pressure. Hence, in this case, the thin juice and the steam are fed to the first evaporator and to the heating element of the first evaporator, respectively. From here, the juice continues to the second evaporator and the vapours continue to the heating element of the second evaporator. This process where the juice continues to the subsequent evaporator and the vapours to the heating element of the subsequent evaporator is repeated as often as desired. After the last evaporator the juice - which is now thick juice - is forwarded to the crystallization section of the factory, stored or used for any other desirable purpose. The vapours from the last evaporator may be used in other parts of the factory. The non-usable part of the vapour is condensed, which contributes to the condenser loss.

Alternatively the evaporators may be arranged in backward feed arrangement, with the evaporators arranged from high-to-low Brix and from high-to-low pressure. In this backward feed arrangement, the thin juice thus enters the last evaporator from where the slightly thickened juice continues to the penultimate evaporator, etc.. The vapours from the last evaporator may be used in other parts of the factory. Again, the left-over, non-usable part of the vapour contributes to the condenser loss.

If beneficial, also intermediate arrangements, i.e. between forward feed and backward feed arrangement, may be used.

In the art, the order of the evaporators is determined from the perspective of the steam/vapour flow. This may be different from the order of the evaporators from the juice flow.

Multiple-effect evaporation plants in sugar beet factories typically have up to eight effects. The term effects is considered to be synonymous to evaporators in the context of multiple-effect evaporation. Because of economic feasibility, the instalment costs of the number of effects needs to be balanced against the potential benefits of having said number of effects. Using a higher number of effects becomes increasingly less attractive due to the increasing capital costs at decreasing energy efficiency gain with each next additional effect. Moreover, a higher number of effects requires either increasingly more heating surface and/or a larger temperature difference between the first and the last effect. The temperature difference between the first and last effect is preferably limited because a too high temperature (such as 130 °C or higher) in the first effect may cause discoloration of the juice to be concentrated. Also a too low temperature in the last effect (such as vapour temperatures of 85 °C) limits the possibilities of using these vapours in other parts of the factory and/or limits the potential of using waste heat. This together with the effect of boiling point elevation due to concentration effects, make further evaporation steps less effective.

The amount of water vapour boiled off in the last evaporator depends, among other things, on the Brix value of the thin juice supplied to the evaporative concentration step. Since the evaporative concentration step aims at reaching a thick juice with a specific Brix value, the Brix value of the thin juice supplied to the evaporative concentration step determines how much water needs to be evaporated and how much water vapour results from the last evaporator operating at the lowest pressure.

The vapour boiled off in the last evaporator, operated at the lowest pressure, can be used in other steps of the sugar manufacturing process to the extent that it is needed. The remainder of this vapour is condensed and its heat is released to the environment. Hence, given a specific demand of steam of a specific vapour quality in other steps of the sugar manufacturing process and a specific desired Brix value of thick juice after evaporative concentration as input parameters, it is the Brix value of the thin juice that determines the condenser loss. This Brix value of the thin juice can fluctuate, for example due to lower sugar concentration in the beet or due to a higher amount of water used in the extraction. Furthermore, also the steam demand of the other parts of the process can fluctuate due to e.g. seasonal fluctuations in outside temperature (long term fluctuations) or batch wise operation of the crystallizer (short-term fluctuations).

Indian patent application 367/MUM/2005 discloses a multiple-stage evaporation process for concentration of sugar cane juice, with 3 to 9 effects, preferably 7, and with a thermocompressor (i.e. thermal vapour compressor) provided at an intermediate stage, such as the third stage, for recompression of a major portion of the steam generated in that stage, which recompressed steam is recycled back to the first stage of the multiple-stage evaporation. The evaporators are falling film evaporators. The system is provided with a water cooled condenser to condense the steam coming from the last stage evaporator. It is described in 367/MUM/2005 that the pressure at the suction of the thermocompressor is controlled for the stable operation of the thermocompressor under various operating conditions.

Thermocompressors are designed to pressurize low-pressure suction steam, such as low-energy water vapour resulting from evaporation in multiple-effect evaporation, by accurately mixing the low pressure suction steam with high pressure motive steam. Suction steam at pressure $p_0$ and mass flow rate $\dot{M}_0$ is combined in a thermocompressor with motive steam at a pressure $p_1 > p_0$ and mass flow rate $\dot{M}_1$, resulting in a mixed steam flow $\dot{M} = \dot{M}_0 + \dot{M}_1$ at discharge pressure $p$, with $p > p_0$. The steam consumption $\dot{M}_1$ of a thermocompressor depends, among other things, on the compression ratio $K (= p/p_0)$, on the expansion ratio $E (= p_1/p_0)$, and on the temperatures of the motive and suction flows. Given these parameters and given a desired value of the suction steam flow rate $\dot{M}_0$, the steam consumption $\dot{M}_1$ can be estimated from steam consumption diagrams available for specific types of thermocompressors.

The entrainment ratio of a thermocompressor, which is a measure of its efficiency, is defined as $\dot{M}_0/\dot{M}_1$. A thermocompressor is designed to perform optimally i.e. with the highest entrainment ratio given the limitations that a factory imposes, such as a given amount of suction steam at pressure $p_0$, the available motive steam pressure $p_1$ and a required pressure for the compressed vapour $p$. Said thermocompressor will be most energy efficient when operated at exactly these conditions. When the amount of suction steam is lowered or when it has a lower pressure po, the thermocompressor will operate outside the conditions for which it was designed resulting in a lower efficiency. Typically optimal conditions for a thermocompressor include being operated at maximized suction steam mass flow rate $\dot{M}_{0,max}$ and at a maximized entrainment ratio. The maximized entrainment ratio is achieved at $\dot{M}_{0,max}$.

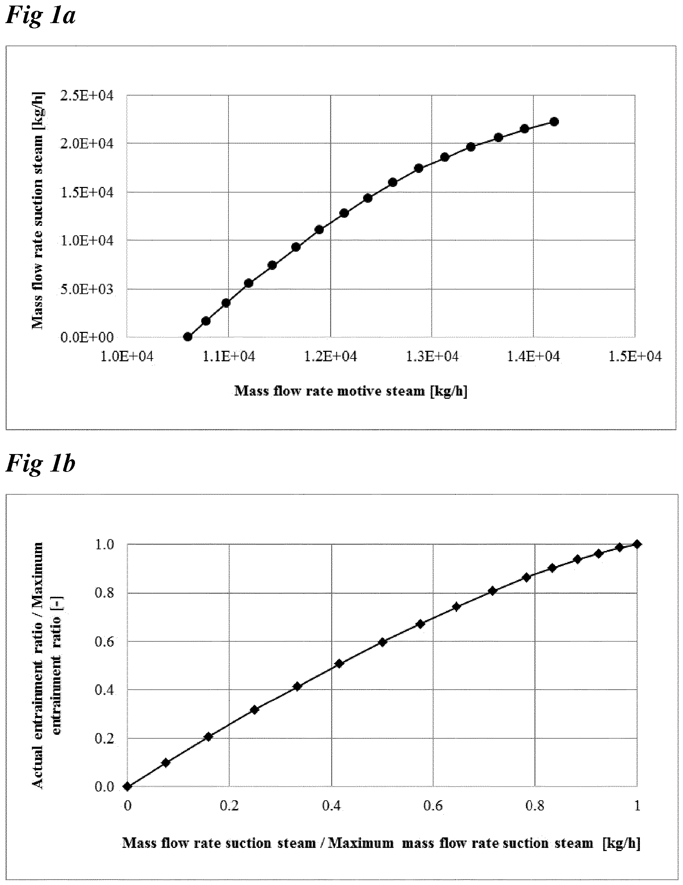

This means that the relative mass flow rate of motive steam $(\dot{M}_{1,max}/(\dot{M}_{0,max} + \dot{M}_{0,max}))$ required to recompress the suction steam of pressure $p_0$ to pressure $p$ decreases with increasing motive steam mass flow rate $M_1$. As a result the relative mass flow rate of motive steam required to recompress the suction steam of pressure $p_0$ to pressure $p$ decreases with increasing suction steam mass flow rate $\dot{M}_0$. In other words, the motive steam usage is most efficient at the maximum motive steam flow rate $\dot{M}_{1,max}$ and he corresponding suction steam mass flow rate $\dot{M}_{0,max}$ of the thermocompressor. At suction flow rates lower than $\dot{M}_{0,max}$ the entrainment ratio strongly drops. As a matter of fact, a typical thermocompressor may use up to 75% of the motive steam required to recompress suction steam mass flow rate $\dot{M}_{0,max}$ for compressing a suction steam reaching zero mass flow rate. For example, the minimum amount of motive steam used by a thermocompressor, whilst hardly compressing any suction vapours, may be up to 75% of the maximum amount of motive steam used. A typical diagram of suction steam mass flow rate $\dot{M}_0$ versus motive steam mass flow rate $\dot{M}_1$ for a single thermocompressor is depicted in Figure 1a. The corresponding diagram of entrainment ratio (scaled) versus suction steam mass flow rate $\dot{M}_0$ (scaled) is depicted in Figure 1b.

Hence, thermocompressors only have a single optimal operating point at the highest suction steam mass flow rate $\dot{M}_{0,max}$ and at the highest entrainment ratio. If one deviates from this operating point, the results in terms of motive steam usage are suboptimal or thermocompression may even completely fail.

If a single thermocompressor is applied, condenser loss can be reduced. In this case fluctuations in Brix values of the thin juice to be concentrated and/or fluctuations in the steam demand can be corrected by thermal vapour recompression of part of the water vapour resulting from evaporation in one of the evaporators and by using the compressed vapour in the heating element of one of the evaporators to achieve additional evaporation. However, when controlling the amount of compressed vapours by controlling the motive steam flow, the single thermocompressor will mostly be operated at suboptimal conditions and thereby wasting valuable high pressure motive steam.

US4119436A discloses a process for refining sugar wherein an aqueous sugar bearing extract is concentrated to produce a concentrate having a preselected percentage of fixed solids, said process including recompression evaporation.

US2005/260313A1 discloses a method for producing tomato paste from tomato juice, said method comprising multiple stage evaporation and recycling steam from an outlet of a final evaporation unit by thermal vapour recompression, for use in an input of a first evaporation unit.

US4530737A discloses a method for concentrating a solution using a recompression evaporation plant comprising at least one evaporation unit, the method comprising evaporating liquid from and thus concentrating the solution in the evaporation unit and mixing the concentrated solution directly with overheated vapour obtained from the recompression evaporation plant, the vapour being sufficiently heated to further vaporize liquid.

It is an object of the invention to reduce the condenser loss in the multiple-effect evaporation plants. In addition it is object of the invention to be able to adapt the process and/or the amount of evaporation needed in a multiple-effect evaporation plant, such that the a thick juice having a Brix value corresponding setpoint is obtained irrespective of the Brix of the thin juice or vapour demand of the process while reducing the condenser loss to nearly zero.

## SUMMARY OF THE INVENTION

The inventors have established that condenser loss can be minimized or even reduced to about zero with efficient use of motive steam when part of the water vapour resulting from evaporation in the evaporators is subjected to thermal vapour recompression along with motive steam in two or more thermal vapour recompressors connected in parallel and wherein the thermally recompressed vapour is subsequently used in the heating element of one of the evaporators. By applying two or more thermal vapour recompressors connected in parallel, the recompression capacity can be changed to match the amount of recompression needed to obtain the desired additional or reduced evaporation in the multiple-effect evaporation system.

When using two or more thermal vapour recompressors, low pressure suction steam (the water vapour that needs to be subjected to thermal vapour recompression) can be distributed over the two or more thermal vapour recompressors such that said thermal vapour recompressors can operate as close as possible to their optimal operating point, meaning operating at their highest entrainment ratio and highest suction steam mass flow rate, such that valuable motive steam is most efficiently used. The higher the number of thermal vapour recompressors connected in parallel, the better any mass flow rate of suction steam can be distributed over the thermal vapour recompressors operating as close as possible to their optimal operating points.

The two or more thermal vapour recompressors connected in parallel have a maximum total recompressor capacity that is defined by the sum of the individual recompressor capacities of the recompressors when the recompressors are operated at their entrainment ratio. By adding or removing separate thermal vapour recompressors from the process, the effective total recompressor capacity can be changed whilst the active thermal vapour recompressors are still operated close to their maximum entrainment ratio. It is hereby understood that adding or removing a recompressor implies that a series of pipes and valves is used to add or remove a recompressor from the process. In other words, individual recompressors can be switched on, meaning that they actively compress vapour, and can be switched off, meaning that no vapour is passing through them.

By choosing the effective total recompressor capacity such that the vapour boiled off in the last evaporator is close to or even exactly meets the demand of steam of this vapour quality in other steps of the sugar manufacturing process, the resulting condenser loss is reduced or even zero. This is even possible when fluctuations in the Brix value of the thin juice to be concentrated occur or fluctuations in the steam demand occur, for example due to batch and/or seasonal variations.

## BRIEF DESCRIPTION OF THE FIGURES

Figure 1a depicts a typical diagram of the suction steam mass flow rate $\dot{M}_0$ versus motive steam mass flow rate $\dot{M}_1$ for a single commercially available thermal vapour recompressor. The applicable operating conditions include $P_1$ = 50 bara, $T_1$=420 °C, $P_0$ = 2.05 bara and P=3.35 bara. Here bara is used to indicate absolute pressure which means that vacuum is used as reference. The corresponding diagram of scaled entrainment ratio $(\dot{M}_0/\dot{M}_1)/(\dot{M}_0/\dot{M}_1)_{max}$ versus scaled suction steam mass flow rate $\dot{M}_0/\dot{M}_{0,max}$ for the single thermal vapour recompressor is depicted in Figure 1b.

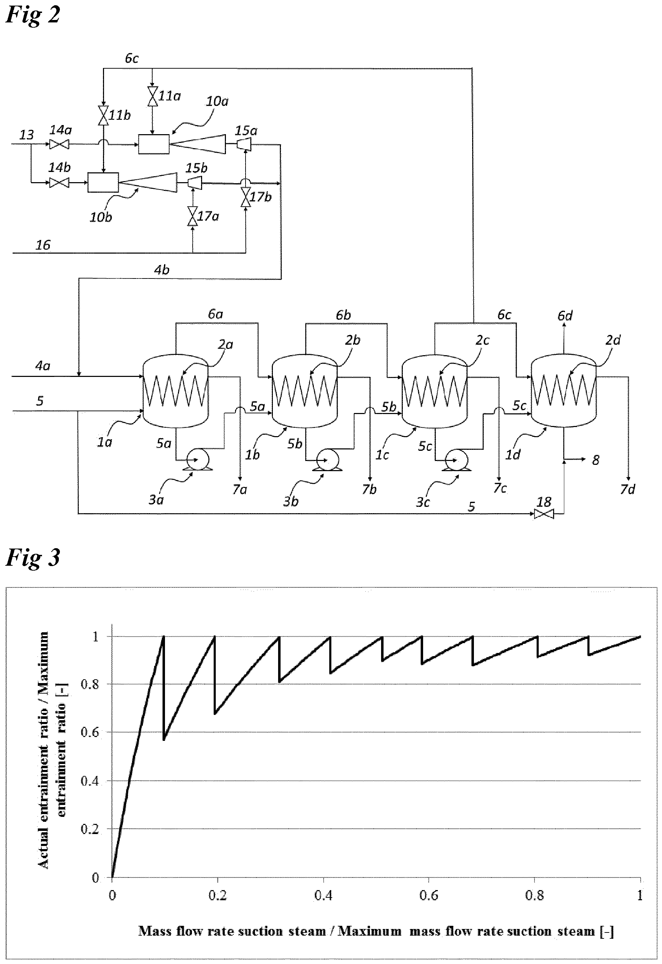

Figure 2 schematically depicts a flow diagram of a process according to the invention for the manufacture of thick juice, as part of a sugar manufacturing process, by evaporative concentration of thin juice of sugar beet, sugar cane, or combinations thereof, using multiple-effect evaporation with four effects and thermal vapour recompression of part of the water vapour obtained in evaporator three using two thermal vapour recompressors connected in parallel with vapours and juice in forward feed arrangement.

Figure 3 schematically depicts a diagram of scaled entrainment ratio versus scaled suction steam mass flow rate for four thermal vapour recompressors connected in parallel, wherein a first thermal vapour recompressor has 10 % of the total thermal vapour recompression capacity, a second thermal vapour recompressor has 10 % of the total thermal vapour recompression capacity, a third thermal vapour recompressor has 30 % of the total thermal vapour recompression capacity and a fourth thermal vapour recompressor has 50 % of the total thermal vapour recompression capacity.

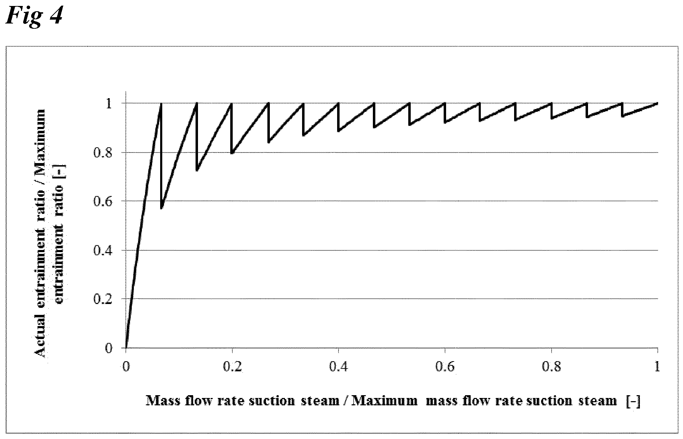

Figure 4 schematically depicts a diagram of scaled entrainment ratio versus scaled suction steam mass flow rate for four thermal vapour recompressors connected in parallel, wherein a first thermal vapour recompressor has 6.7 % of the total thermal vapour recompression capacity, a second thermal vapour recompressor has 13.3 % of the total thermal vapour recompression capacity, a third thermal vapour recompressor has 26.7 % of the total thermal vapour recompression capacity and a fourth thermal vapour recompressor has 53.3 % of the total thermal vapour recompression capacity.

## DETAILED DESCRIPTION

In a first aspect, the invention provides for a process for the manufacture of a thick juice having a Brix value of between 65 and 80 °Bx by evaporative concentration of thin juice of sugar beet, sugar cane, or combinations thereof, said process comprising:

  (i) providing a thin juice of sugar beet, sugar cane, or combinations thereof, said thin juice having a Brix value of between 10 and 25 °Bx;
  (ii) subjecting the thin juice to multiple-effect evaporation in $n$ serial evaporators, wherein $n$ is an integer ranging from 3 to 10,

    wherein each evaporator is characterized from the steam/vapor flow by $x$, $x$ being an integer ranging from 1 to $n$, and from the juice flow by $y$, $y$ being an integer ranging from 1 to $n$,
    wherein each evaporator comprises a cavity for holding the juice to be concentrated and a heat exchange element for heating the juice to be concentrated,
    wherein steam is fed to the heat exchange element of evaporator $x=1$, wherein for every evaporator $x=1$ to $x=n$-1 at least part of the water vapour resulting from evaporation in evaporator $x$ is fed to the heat exchange element of $x+1$,
    wherein the thin juice of (i) is fed to the cavity of evaporator $y=1$,
    wherein for every evaporator $y=1$ to $y=n$-1 at least part of the juice resulting from evaporation in evaporator $y$ is fed to the cavity of $y+1$,

    wherein the juice resulting from evaporation in evaporator $y=n$ is the thick juice having a Brix value of between 65 and 80 °Bx, and
    wherein at least one interconnection for transporting the vapour from the cavity of an evaporator to the heat exchange element of another evaporator allows to redirect at least part of the vapour to two or more thermal vapour recompressors operated in parallel, said combined two or more thermal vapour recompressors having an effective total thermal vapour recompressor capacity;

  (iii) monitoring the Brix of the juice in any one of the evaporators characterized by $y>1$, preferably characterized by $y=n$, and determining the difference between said Brix and a setpoint;
  (iv) reducing, and preferably minimizing, the difference of (iii) by adapting the effective total thermal vapour recompressor capacity;
  (v) optionally adding the thermally recompressed vapour of (iv) to a steam cooler and injecting water to the cooler to obtain thermally recompressed vapour with a reduced temperature;
  (vi) feeding the thermally recompressed vapour of (iv), or optionally the thermally recompressed vapour having reduced temperature of (v), to the heat exchange element of evaporator 1 or 2 for heating the thin juice to be concentrated;
  (vii) discharging the thick juice from the cavity of evaporator $y=n$; and
  (viii) optionally adjusting the Brix value of the thick juice obtained in (vii) to the required value of between 65 and 80 °Bx by diluting the thick juice with thin juice of sugar beet, sugar cane, or combinations thereof, said thin juice having a Brix value of between 10 and 25 °Bx.

Throughout the text 'sugar' has its usual meaning which is a disaccharide sucrose and/or a product of the sugar industry which is essentially composed of sucrose. A sugar beet refers to a plant having a root high in sugar content such as a subspecies of Beta vulgaris. A sugar cane refers to a grass of the genus *Saccharum*, which is a cane having stalks that are rich in sugar. A setpoint is a specific and/or desired Brix value.

Thin juice refers to an aqueous solution comprising between 10 and 25 °Bx, more preferably between 12 and 22 °Bx, even more preferably between 14 and 20 °Bx and most preferably between 15 and 20 °Bx. The Brix value is a measure of dissolved solids, such as dissolved sugar, in a solution such as thin juice, thick juice, syrup, liquor or any other sugar comprising solution. At present - where Brix value is used to denote the amount of sugar in an aqueous solution substantially free from other components - the term Brix value is proportionally to the mass percentage of sugar. The terms 'Brix' and 'Brix value' are used interchangeably.

The term thick juice in the context of the present invention relates to an intermediate concentrated sugar solution after the evaporation section in a sugar factory or refinery, with or without dissolved sugar or dissolved sugar juices from intermediate sugar crystallization products. In the art the term standard liquor is sometimes used to denote that thick juice is mixed with sugar or sugar juices from intermediate sugar crystallization products. For the sake of simplicity we will use throughout the text the term thick juice according to the above definition, i.e. including standard liquor.

The process of the invention comprises multiple evaporators. Hence the process where thin juice is converted into thick juice is a step-wise process in which intermediate juices having a sugar concentration higher than thin juice but lower than thick juice are formed. These intermediate juices are throughout this text referred to as juice, partially concentrated juice or as slightly thickened juice.

Multiple-effect evaporation refers to a process for the concentration of a thin juice in which multiple effects are connected in series. An effect is synonymous for evaporator or evaporator effect and refers to a closed pan in which water is boiled off in order to concentrate the liquid in the pan. If beneficial, an evaporator effect may comprise multiple evaporator bodies. The energy required for the evaporation is delivered to the evaporator via one or more heat exchange elements. For simplicity we will use, throughout this document, the term heat element to denote all the heat elements in an evaporator.

The process according to the invention comprises subjecting the thin juice to $n$ serial concentration steps using multiple-effect evaporation in $n$ serial evaporators, wherein n is an integer ranging from 3 to 10. Given the demand of steam of a specific vapour quality in other steps of the sugar manufacturing process, the initial Brix value of the thin juice to be concentrated and the required Brix value of the thick juice, it can be computed - at any point in time - how much additional evaporation is needed in the evaporators. The required additional evaporation can then be converted to the amount of water vapour that needs to be subjected to thermal vapour recompression and to a specific combination and/or interconnection of thermal vapour recompressors connected in parallel that provides this amount of thermally recompressed vapour for use in the heating element of one of the evaporators in an optimal way.

Alternatively, it is possible to monitor the Brix of the thick juice and compare it to the required setpoint. Depending on the difference between the setpoint and the Brix of the produced thick juice, the recompressor capacity and with this the amount of water vapour that is directed to the recompressors can be adapted in order to achieve said desired additional or reduced water evaporation. Alternatively, the effective total recompressor capacity can be set to match the amount of water vapour needed such that the desired evaporation is achieved.

As is custom in the art, the evaporators of the multiple-effect evaporation are numbered following the flow of steam and vapour. Hence the evaporator having the heat element where steam enters the process is denoted by evaporator $x$=1. The vapour produced during evaporation in the first evaporator is fed into the heat element of the evaporator $x$=2. The vapour produced during evaporation in evaporator $x$=2 is fed into the heat element of evaporator $x$=3 and so on.

The flow of juice may or may not follow the flow of steam and vapour. According to the invention that is described above, the thin juice is fed to the cavity of evaporator $y$, $y$ being an integer ranging from 1 to $n$, and the partially concentrated juice resulting from evaporation in an evaporator is fed to a subsequent evaporator $y$+1. It is understood that the term subsequent refers to any other evaporator that is not yet part of the process or that has not been passed by the thin juice or the partially thickened juice prepared from the thin juice. In other words the juice in a cavity of an evaporator never continues to an evaporator filled with juice having a lower Brix value.

The case that the flow of juice does follow the flow of steam and vapour - i.e. the thin juice enters evaporator $x$=$y$=1, the slightly thickened juice goes from evaporator $x$=$y$=1 to evaporator $x$=$y$=2, the slightly more thickened juice goes from evaporator $x$=$y$=3 to $x$=$y$=4, etc. - is denoted as forward feed. In this case the thin juice of (i) is thus fed to the cavity of evaporator $y$=1 and the partially concentrated juice resulting from evaporation in evaporator $y$ is fed to evaporator $y$+1.

The case that the flow of juice is exactly opposite to the flow of steam and vapour, i.e. thin juice enters at evaporator $y$=1 and $x$=$n$, the slightly thickened juice goes from evaporator $y$=1 and $x$=$n$ to $y$=2 and $x$=$n$-1, the slightly more thickened juice goes from evaporator $y$=2 and $x$=$n$-1 to $y$=3 and $x$=$n$-2, etc - is called backward feed.

Also it is possible that the juice will follow a flow through the evaporators that is neither truly forward feed nor backward feed. The juice enters the process at an evaporator and successively moves to the next until all evaporators have been passed once. This setup can be denoted as a mixed feed. An example of a mixed feed arrangement for a multiple-effect evaporation in 8 serial evaporators, may be an arrangement where the thin juice is fed to the 5th evaporator when looking from the steam / vapor side. Hence the thin juice is fed to evaporator $x$=5 and $y$=1. The juice subsequently continues to evaporator $x$=1 and $y$=2, to $x$=2 and $y$=3, to $x$=3 and $y$=4, to $x$=4 and $y$=5, to $x$=6 and $y$=6, to $x$=7 and $y$=7 and finally to $x$=8 and $y$=8.

Using alternatively wording, every evaporator is denoted with 2 indices: $x$ and $y$. The steam and vapour travel through the evaporators following index $x$. The steam enters the process at the heat element of evaporator $x$ = 1, the vapour produced in evaporator $x$ = 1 goes to the heat element of evaporator $x$ = 2, etc until the vapour of $x$ = $n$ - 1 goes to the heat exchange element of evaporator $x$ = $n$. Similarly the juice travels through the evaporators following index *y*. Hence the thin juice enters the process at evaporator *y* = 1, the partially concentrated juice subsequently goes from evaporator *y* = 1 to evaporator *y* = 2, the next partially concentrated juice subsequently goes from evaporator *y* = 2 to evaporator *y* = 3, etc until the concentrated juice enters evaporator *y* = *n*.

The case of forward feed is represented by having *x* = *y* for every evaporator and backward feed is represented by having y = *n* - *x* + 1 for every evaporator. In the case of mixed feed is represented by all options for combinations of *x* and *y* not being forward or backward feed.

The Brix of the partially concentrated juice and/or the thick juice leaving the cavity of at least one of the evaporators is measured using conventional means. Known methods of measuring Brix include, but are not limited to, inline microwave techniques, Coriolis flow determination, specific gravity measurements using e.g. a hydrometer or pycnometer, refractive index measurements using e.g. a refractometer and infrared adsorption techniques including near infrared (NIR) and Fourier Transform Infrared Spectrometry (FT-IR) techniques. In a preferred embodiment, the Brix is measured in the last evaporator when looking from the juice flow side, i.e. in the evaporator characterized as *y*=*n*. In a more preferred embodiment the Brix is measured in multiple evaporators in order to better control the full process and allow for a faster response to change.

Said measured Brix is compared to a setpoint and based on the difference the process conditions may be adapted. Said setpoint may be any value between 10 and 80 °Bx, preferably between 25 and 80 °Bx, more preferably between 40 and 80 °Bx, even more preferably between 50 and 80 °Bx and most preferably between 60 and 80 °Bx. In case that the Brix of the thick juice (i.e. the juice in the last evaporator when looking from the juice side) is measured, the setpoint is between 65 and 80 °Bx, preferably between 68 and 78 °Bx and most preferably between 70 and 78 °Bx. Depending on the setup and details of the specific manufacturing site, it might be desired to use a setpoint of between 70 and 72 or of between 76 and 78.

It is understood that the process of the invention uses steam and that said steam has a higher pressure than the vapour from any of the evaporation steps. Furthermore, the evaporators are operated from high to low pressure. Thermocompression can be used to increase the pressure of a vapour stream. A thermocompressed vapour stream thus has an increased pressure and can therefore be reintroduced earlier in the process where the pressure corresponds to the increased pressure of the vapour stream. Hence the thermocompressor is used to recompress a vapour stream. Therefore this type of compression is also denoted a recompression and a thermocompressor is also called a recompressor, thermal vapour recompressor, or thermalrecompressor. It is therefore understood that throughout this text, the meaning of the terms thermocompressor, recompressor, thermal vapour recompressor, and thermalrecompressor is identical and that these terms can be used interchangeable.

According to the current invention, the process is optimized by adapting the amount of vapour that is redirected to the thermal recompressors and adapting the effective total thermal vapour recompressor capacity, wherein the effective total recompressor capacity is the total recompressor capacity of all compressors that are turned on. The effective total recompressor capacity is adapted such that it is matched as close as possible to the amount of vapour that needs to be recompressed.

It is understood that by adapting the effective total thermal vapour recompressor capacity, such as mentioned for instance in (iv), implies changing or controlling the effective total thermal recompressor capacity such that additional evaporation is achieved when the Brix of (iii) is lower than the setpoint or reduced evaporation is achieved when the Brix of (iii) is higher than the setpoint.

The total thermal vapour recompressor capacity is determined by two or more thermal vapour recompressors connected in parallel with a maximum total recompressor capacity that is defined by the sum of the individual recompressor capacities of the recompressors when the recompressors are operated at their maximum suction steam mass flow rate $\dot{M}_{0,max}$. By adding or removing separate thermal vapour recompressors from the process, the effective total recompressor capacity can be changed whilst the active thermal vapour recompressors are preferably still operated at their maximum entrainment ratio. It is hereby understood that adding or removing a thermocompressor implies that a series of pipes and valves is used to add or remove a thermocompressor from the process. In other words, an individual thermocompressor can be switched on, meaning that it actively compresses vapour, and can be switched off, meaning that it is disconnected from the process and that no vapour is passing through it.

It is understood that by adapting the effective total thermal vapour recompressor capacity, the amount of vapour that is redirected to the thermal recompressors also changes. It is also understood that the amount of vapour that is recompressed depends on many factors including the effective total thermal vapour recompressor capacity. Each active recompressor needs to be fed separately with motive steam, which implies that the total amount of motive steam - whereby the total amount of motive steam is defined as the sum of the motive steam usage of all active recompressors - needs to be adapted accordingly.

As described above a thermocompressor mixes a stream of suction steam with a stream of motive steam. The resulting mixed stream of steam will have a pressure higher than the pressure of the suction steam and lower than the pressure of the motive steam. Also the temperature of the mixed steam will be higher than the temperature of the suction steam. In some cases the temperature of the mixed steam might be higher than desired. An option to solve to reduce the temperature of said mixed steam is to inject a small amount of water. Preferably the thermocompressed steam has a temperature of between 125 and 150°C.

The recompressed vapour, or the cooled recompressed vapour, is fed into the heat exchange element of the first or second evaporator when looking from the steam or vapour side, i.e. into the heat exchange element of evaporator $x$=1 or $x$=2. The result of feeding the recompressed vapour to the heat exchange element of an evaporator - on top of the steam or vapour coming from the previous evaporator - is that the amount of evaporated water will increase. Hence the thin juice or partially thickened juice will thicken or concentrate more in said evaporator. In case that the recompression is performed over more than 1 evaporator - e.g. vapour is extracted after evaporator 4 and injected before evaporator 2, the evaporators between the vapour extraction point and vapour injection point will receive additional vapour also resulting in additional evaporation, which will subsequently also influence evaporation in the subsequent evaporator, etc.. Evaporators after the vapour extraction point will receive a reduced vapour stream.

When the difference between the Brix of partially thickened juice in an evaporator and the relevant setpoint is negative or when the difference between the Brix of thick juice in evaporator $y$=$n$ and the relevant setpoint is negative, additional evaporation is needed to increase the Brix of the partially thickened juice or the Brix of the thick juice. Hence the above described amount of vapour that is redirected needs to be increased and the total effective thermal vapour recompressor capacity needs to be increased equivalently to compress the increased amount of vapour whilst remaining at a high or preferably the maximum entrainment ratio.

Equivalently, when the difference between the Brix of partially thickened juice in an evaporator and the relevant setpoint or between the Brix of thick juice in evaporator $y$=$n$ and the relevant setpoint is positive, a reduction of evaporation is needed to decrease the Brix of the partially thickened juice or the Brix of the thick juice. Hence the above described amount of vapour that is redirected needs to be increased and the total thermal vapour recompressor capacity needs to be increased equivalently to compress the increased amount of vapour whilst remaining at a high or preferably the maximum entrainment ratio.

After the thin juice has passed all evaporators it will be in the last evaporator $y$=$n$, where last refers to the last evaporator when viewed from the juice flow, i.e. where the thick juice is ultimately obtained. From here it will be discharged after which it may be stored for future processing, or directly processed into sugar crystals or other sugar-comprising products.

In a preferred embodiment, the thin juice applied in (i) is a thin juice of sugar beet. In a preferred embodiment, the process as defined hereinbefore is a process for the manufacture of a thick juice having a Brix value of between 70 and 72 °Bx, such as about 71 °Bx, wherein the thin juice provided in (i) has a Brix value of between 16 and 18 °Bx. In another preferred embodiment, the process as defined hereinbefore is a process for the manufacture of a thick juice having a Brix value of between 77 and 79 °Bx, such as about 78 °Bx, wherein the thin juice provided in (i) has a Brix value of between 16 and 18 °Bx.

With only a limited number of parallel connected thermal vapour recompressors, due to process fluctuations and lag time in process control, efficiently using motive steam and exactly controlling zero condenser loss and the Brix value of the thick juice discharged from the cavity of evaporator $y$=$n$ is difficult. For that reason, additional evaporation in (iii) based on a higher Brix value of the thick juice discharged from the cavity of evaporator $y$=$n$ than the required Brix value of the final thick juice will in most instances be advantageous in the case that the costs for too low thick juice brix are higher than the costs for overcompression leading to too high brix. The required Brix value of the final thick juice can then always be obtained by diluting with thin juice or water. In other words, fluctuations in Brix value of the thin juice to be concentrated and further process fluctuations due to, for example, lag time in process control, can be compensated for by increased thermocompression, resulting in a thick juice with a too high Brix value which can always and easily be adjusted to the required value by dilution with thin juice. Hence, instead of steering the required Brix value of thick juice with condenser loss, condenser loss is minimized or even reduced to zero using thermal vapour recompression and the required Brix value of thick juice is realized by dilution of the thick juice with thin juice or with water.

Hence it may be beneficial to use a setpoint to a Brix value slightly higher than the desired Brix value since in most instances with the fluctuations slight overcompression of the vapours and associated slightly higher thick juice brix give a higher economic and/or energy saving, than when the thick juice would drop below the desired setpoint. If the thick juice has exactly the Brix of the setpoint or even a higher Brix than the setpoint, the thick juice may be diluted slightly to the setpoint by adding some thin juice or some water.

Hence, in a preferred embodiment, the process as defined hereinbefore is a process for the manufacture of a thick juice having a Brix value of between 65 and 78 °Bx, wherein the thin juice provided in (i) has a Brix value of between 10 and 22 °Bx, wherein in (iii) the amount of additional evaporation needed in evaporator 1 or 2 is calculated based on a Brix value of the thick juice in evaporator $y$=$n$ that is 0.1 to 2 % higher, preferably between 0.2 and 1% higher, than the Brix value of between of between 65 and 78 °Bx, and wherein in (i) the Brix value of the thick juice obtained in (vii) is adjusted to the required value of between 65 and 78 °Bx by diluting the thick juice with thin juice as defined in (i) or water.

In another preferred embodiment, the process as defined hereinbefore is a process for the manufacture of a thick juice having a Brix value of between 70 and 72 °Bx, wherein the thin juice provided in (i) has a Brix value of between 16 and 18 °Bx, wherein in (iii) the amount of additional evaporation needed in evaporator 1 or 2 is calculated based on a Brix value of the thick juice after evaporator n that is 0.1 to 2 % higher, preferably between 0.2 and 1% higher, than the Brix value of between of between 70 and 72 °Bx, and wherein in (i) the Brix value of the thick juice obtained in (vii) is adjusted to the required value of between 70 and 72 °Bx by diluting the thick juice with thin juice as defined in (i).

In another preferred embodiment, the process as defined hereinbefore is a process for the manufacture of a thick juice having a Brix value of between 77 and 79 °Bx, wherein the thin juice provided in (i) has a Brix value of between 16 and 18 °Bx, wherein in (iii) the amount of additional evaporation needed in evaporator 1 or 2 is calculated based on a Brix value of the thick juice after evaporator n that is 0.1 to 2 % higher, preferably between 0.2 and 1% higher, than the Brix value of between of between 77 and 79 °Bx, and wherein in (i) the Brix value of the thick juice obtained in (vii) is adjusted to the required value of between 77 and 79 °Bx by diluting the thick juice with thin juice as defined in (i).

Using this process, the amount of vapour boiled off in evaporator n is as close as possible or exactly meets the demand of steam of this specific vapour quality in other steps of the sugar manufacturing process hereby minimizing the condenser losses.

The total thermal vapour recompressor capacity of the combined thermal vapour recompressors is the maximum suction steam mass flow rate the combined thermal vapour recompressors can recompress.

In a preferred embodiment, the thermally recompressed vapour is mixed with injection water in a steam cooler to obtain thermally recompressed vapour with a reduced temperature. In a more preferred embodiment, the thermally recompressed vapour with a reduced temperature has a temperature of between 125 and 150°C.

It is to be understood that the specific combination of two or more thermal vapour recompressors connected in parallel as required in (ii) implies two or more thermal vapour recompressors with piping and valves arranged such that they operate in parallel, wherein each thermal vapour recompressor can be separately turned off and on and wherein each thermal vapour recompressor can be independently supplied with suction steam and motive steam. With such a connection, any mass flow rate of suction steam not exceeding the total thermal vapour recompressor capacity of the combined thermal vapour recompressors can be distributed over the two or more thermal vapour recompressors such that they can operate as close as possible to their optimal operating point, meaning operating as close as possible to their highest entrainment ratio and highest suction steam mass flow rate. The higher the number of thermal vapour recompressors connected in parallel, the better any mass flow rate of suction steam can be distributed over the thermal vapour recompressors operating as close as possible to their optimal operating points.

In a preferred embodiment, the number of thermal vapour recompressors connected in parallel in the process as defined hereinbefore is two, and:

(i) a first thermal vapour recompressor has 20 to 50 % of the total thermal vapour recompressor capacity; and
(ii) a second thermal vapour recompressor has between 50 and 80 % of the total thermal vapour recompressor capacity.

In another preferred embodiment, the number of thermal vapour recompressors connected in parallel in the process as defined hereinbefore is three, and:

(i) a first thermal vapour recompressor has between 10 and 35 % of the total thermal vapour recompressor capacity;
(ii) a second thermal vapour recompressor has between 10 and 35 % of the total thermal vapour recompressor capacity; and
(iii) a third thermal vapour recompressor has between 50 and 70 % of the total thermal vapour recompressor capacity.

In yet another preferred embodiment, the number of thermal vapour recompressors connected in parallel in the process as defined hereinbefore is four, and:

(i) a first thermal vapour recompressor has between 5 and 15 % of the total thermal vapour recompressor capacity;
(ii) a second thermal vapour recompressor has between 5 and 15 % of the total thermal vapour recompressor capacity;
(iii) a third thermal vapour recompressor has between 20 and 40 % of the total thermal vapour recompressor capacity, and
(iv) a fourth thermal vapour recompressor has between 40 and 60 % of the total thermal vapour recompressor capacity.

In a very preferred embodiment, the total thermal vapour recompressor capacity is distributed over w, w being two or more, thermal vapour recompressors connected in parallel such that thermal vapour recompressor i has:

$$\frac{2^{(i-1)}}{\sum_{i=1}^{w} 2^{(i-1)}} 100\%$$

of the total thermal vapour recompressor capacity. In other words, each thermal vapour recompressor i+1 has twice the capacity of the thermal vapour recompressor i, wherein the combined thermal vapour recompressors have the total thermal vapour recompressor capacity.

In another very preferred embodiment, the number of thermal vapour recompressors connected in parallel in the process as defined hereinbefore is two, and:

> (i) a first thermal vapour recompressor has about 33.3 %, of the total thermal vapour recompressor capacity; and
> (ii) a second thermal vapour recompressor has about 66.7 % of the total thermal vapour recompressor capacity.

In this embodiment, the first thermal vapour recompressor can recompress up to 33.3 % of the maximum suction steam mass flow rate, the second thermal vapour recompressor between 33.3 and 66.7 % of the maximum suction steam mass flow rate, and the combined thermal vapour recompressors between 66.7 and 100 % of the maximum suction steam mass flow rate.

In another preferred embodiment, the number of thermal vapour recompressors connected in parallel in the process as defined hereinbefore is three, and:

> (i) a first thermal vapour recompressor has about 14.3 % of the total thermal vapour recompressor capacity;
> (ii) a second thermal vapour recompressor has about 28.6 % of the total thermal vapour recompressor capacity; and
> (iii) a third thermal vapour recompressor has about 57.1 % of the total thermal vapour recompressor capacity.

In this embodiment, the first thermal vapour recompressor can recompress up to 14.3 % of the maximum suction steam mass flow rate, the combined first and second thermal vapour recompressors between 14.3 and 28.6 % of the maximum suction steam mass flow rate, the third thermal vapour recompressor between 28.6 and 42.9 % of the maximum suction steam mass flow rate, and so on.

In yet another preferred embodiment, the number of thermal vapour recompressors connected in parallel in the process as defined hereinbefore is four, and:

> (i) a first thermal vapour recompressor has about 6.7 % of the total thermal vapour recompressor capacity;
> (ii) a second thermal vapour recompressor has about 13.3 % of the total thermal vapour recompressor capacity;
> (iii) a third thermal vapour recompressor has about 26.7 % of the total thermal vapour recompressor capacity, and

pacity, and

> (iv) a fourth thermal vapour recompressor has about 53.3 % of the total thermal vapour recompressor capacity.

In this embodiment, the first thermal vapour recompressor can recompress up to 6.7 % of the maximum suction steam mass flow rate, the second thermal vapour recompressor can recompress between 6.7 and 13.3 % of the maximum suction steam mass flow rate the combined first and second thermal vapour recompressors between 13.3 and 20 % of the maximum suction steam mass flow rate, and so on.

The higher the number of thermal vapour recompressors connected in parallel, the better the amount of water evaporated can be controlled at any desired value. In a very preferred embodiment, in the process as defined hereinbefore, five or more thermal vapour recompressors connected in parallel are applied.

In a very preferred embodiment, the at least two recompressors as defined hereinbefore are operated each separately at their optimal operating point. Worded differently, in a very preferred embodiment, the at least two recompressors as defined hereinbefore are operated each separately at maximum suction steam mass flow rate $\dot{M}_{0,max}$ and/or at maximum motive steam flow rate $\dot{M}_{1,max}$ where the entrainment ratio is also highest.

In a preferred embodiment of the process as defined hereinbefore, the number of serial evaporators $n$ = 6, 7 or 8, more preferably $n$ = 7. In another preferred process as defined hereinbefore, $n$ = 6, 7 or 8 and in (ii) part of the water vapour resulting from evaporation in evaporator 3 is subjected to thermal vapour recompression. In another preferred process as defined hereinbefore, in (vi), the thermally recompressed vapour is fed to the heat exchange element of evaporator 1 for heating the thin juice to be concentrated.

In a preferred embodiment of the process as defined hereinbefore, the number of serial evaporators $n$ = 7 and part of the water vapour resulting from evaporation in evaporator 3 is subjected to thermal vapour recompression, wherein:

> (a) the temperature of the concentrated juice and the temperature of the water vapour in evaporator 1 is between 130 and 133 °C, the pressure in evaporator 1 is between 2.7 and 3.0bara, and the Brix value of the concentrated juice in evaporator 1 is preferably between 19 and 23 °Bx;
> (b) the temperature of the concentrated juice and the temperature of the water vapour in evaporator 2 is between 126 and 129 °C, the pressure in evaporator 2 is between 2.3 and 2.7 bara, and the Brix value of the concentrated juice in evaporator 2 is preferably between 23 and 28 °Bx;
> (c) the temperature of the concentrated juice and the temperature of the water vapour in evaporator 3 is between 117 and 124 °C, the pressure in evaporator 3 is between 1.8 and 2.2 bara, and the Brix value of the concentrated juice in evaporator 3 is preferably between 26 and 32 °Bx;

(d) the temperature of the concentrated juice and the temperature of the water vapour in evaporator 4 is between 111 and 117 °C, the pressure in evaporator 4 is between 1.5 and 1.7 bara, and the Brix value of the concentrated juice in evaporator 4 is preferably between 37 and 45 °Bx;

(e) the temperature of the concentrated juice and the temperature of the water vapour in evaporator 5 is between 105 and 110 °C, the pressure in evaporator 5 is between 1.2 and 1.4 bara, and the Brix value of the concentrated juice in evaporator 5 is preferably between 48 and 58 °Bx;

(f) the temperature of the concentrated juice and the temperature of the water vapour in evaporator 6 is between 97 and 105 °C, the pressure in evaporator 6 is between 0.9 and 1.1 bara, and the Brix value of the concentrated juice in evaporator 6 is preferably between 60 and 67 °Bx; and

(g) the temperature of the concentrated juice and the temperature of the water vapour in evaporator 7 is between 85 and 96 °C, the pressure in evaporator 7 is between 0.6 and 0.8 bara, and the Brix value of the concentrated juice in evaporator 7 is preferably between 70 and 75 °Bx.

In the above embodiment and throughout this text, bara is used to indicate absolute pressure which means that vacuum is used as reference.

In a preferred process as defined hereinbefore, the evaporators are chosen from falling film tube or plate evaporators, rising film tube or plate evaporators or Robert evaporators. Even more preferably, the evaporators are falling film plate evaporators or falling film tube evaporators.

In a second aspect, the invention relates to the use of two or more thermal vapour recompressors connected in parallel in a process for the manufacture of thick juice by evaporative concentration of thin juice of sugar beet, sugar cane, or combinations thereof, using multiple-effect evaporation in $n$ serial evaporators,

wherein $n$ is an integer ranging from 3 to 10, wherein water vapour obtained from evaporation in one or more of the evaporators 1 to $n$-1 is subjected to thermal vapour recompression using motive steam, and wherein the thermally recompressed vapour is used for heating the juice to be concentrated in evaporator 1 or 2, for:

(a) reducing condenser loss or reaching zero condenser loss;
(b) efficiently using motive steam in the two or more thermal vapour recompressors;
(c) obtaining a thick juice with a predetermined Brix value irrespective of process fluctuations and fluctuations in the Brix value of the thin juice; and
(d) a combination of (a), (b) and (c).

The evaporators here above are numbered in the conventional manner, meaning that they follow the steam and vapour flow. Hence evaporator 1 is that evaporator having a heat exchange element connected to the steam source. Evaporator 2 is that evaporator having a heat exchange element that is fed with vapour from evaporator 1.

In a third aspect, the invention can be described as a sugar manufacturing installation comprising 2 or more, preferably 3 or more, more preferably 4 or more, thermal vapor recompressors operated in parallel which are in fluid connection with a multiple-effect evaporation installation having $n$ serial evaporators, wherein $n$ is an integer ranging from 3 to 10. Any recompressor of said 2 or more, preferably 3 or more, more preferably 4 or more, thermal vapor recompressors operated in parallel can be switched on or off affecting the total effective thermal vapor recompressor capacity. By setting the total effective thermal vapor recompressor capacity in such a fashion that it matches the required thermal vapor recompressor capacity the condenser loss can be kept at a minimum and preferably at about zero. The ability to switch individual recompressors on or off allows for a manufacturing installation that can adapt to changing circumstances - such as changes in Brix value of the thin juice - whilst keeping the condenser loss to a minimum, preferably whilst keeping the condenser loss at about zero.

Wherever possible, preferred embodiments can be combined.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb 'to comprise' and its conjugations are used in its nonlimiting sense to mean that items following the word are included, but items not specifically mentioned are not excluded. In addition, reference to an element by the indefinite article 'a' or 'an' does not exclude the possibility that more than one of the element is present, unless the context clearly requires that there be one and only one of the elements. The indefinite article 'a' or 'an' thus usually means 'at least one'.

**EXAMPLES**

**Comparative Example 1**

Figure 1a depicts a diagram of the suction steam mass flow rate $\dot{M}_0$ versus motive steam mass flow

rate $\dot{M}_1$ for a single commercially available thermal vapour recompressor of Körting Hannover AG, number 16-0053-113. The applicable operating conditions include $P_1$ = 50 bara, $T_i$=420 °C, $P_0$ = 2.05 bara en P=3.35 bara. Here bara is used to indicate absolute pressure which means that vacuum is used as reference. The corresponding diagram of entrainment ratio $\dot{M}_0/\dot{M}_1$, scaled by the maximum entrainment ratio $(\dot{M}_0/\dot{M}_1)_{max}$, versus suction steam mass flow rate $\dot{M}_0$, scaled by the maximum suction steam mass flow rate $\dot{M}_{0,max}$, for this thermal vapour recompressor is depicted in Figure 1b. As can be inferred from Figure 1a, this thermorecompressor uses about 75 % (1.06·10^4 kg/h) of the motive steam required to recompress the maximum suction steam mass flow rate $\dot{M}_{0,max}$ (1.42·10^4 kg/h) for recompressing a suction steam reaching zero mass flow rate. It can be inferred from Figure 1b that the entrainment ratio is highest at maximum suction steam mass flow rate $\dot{M}_{0,max}$. This means that the thermal vapour recompressor inefficiently uses motive steam at lower suction steam mass flow rates.

Hence, for efficiency reasons, the thermorecompressor is preferably used at the maximum suction steam mass flow rate $\dot{M}_{0,max}$ where the entrainment ratio is also highest. If multiple-effect evaporation is used along with a single thermorecompressor which is operated at the optimal working operating point, additional evaporation can be established in one or more of the effects. The additional evaporation can however only be regulated by turning on or off the single thermorecompressor or controlling the motive steam flow by decreasing the motive steam pressure by a control valve before the thermocompressor. If, on the other hand, additional evaporation is established by operating the single thermorecompressor at suction steam mass flow rates lower than $\dot{M}_{0,max}$, excessive motive steam may be required.

**Example 1**

Figure 2 schematically depicts a flow diagram of a process for the manufacture of thick juice, as part of a sugar manufacturing process, by evaporative concentration of thin juice of sugar beet, sugar cane, or combinations thereof, using multiple-effect evaporation with four effects and thermal vapour recompression using two parallel thermal vapour compressors according to the invention.

A thin juice (5) is supplied to an indirect contact heat exchanger (1a) ('the first evaporator or effect'). The indirect contact heat exchanger (1a) has a heat exchange surface area (2a), heat exchanger (1b) has a heat exchange surface area (2b), etc.. Steam (4a) is supplied to the indirect contact heat exchanger (1a) for providing the heat required for evaporation. Evaporation of water from the thin juice in indirect contact heat exchanger (1a) results in a more concentrated juice (5a) which is supplied via pump (3a) to a second indirect contact heat exchanger (1b) ('the second evaporator or effect'), a vapour stream (6a) which is also supplied to the second indirect contact heat exchanger (1b) for providing the heat required for evaporation, and a condensate (7a).

Evaporation of water from the juice in indirect contact heat exchanger (1b) results in a more concentrated juice (5b) which is supplied to a third indirect contact heat exchanger (1c) ('the third evaporator or effect') via pump (3b), a vapour stream (6b) which is also supplied to the third indirect contact heat exchanger (1c) for providing the heat required for evaporation, and a condensate (7b).

Evaporation of water from the juice in indirect contact heat exchanger (1c) results in a more concentrated juice (5c), which is supplied via pump (3c) to a fourth indirect contact heat exchanger (1d) ('the fourth evaporator or effect'), a vapour stream (6c) of which at least part is also supplied to the fourth indirect contact heat exchanger (1d) for providing the heat required for evaporation, and a condensate (7c).

Evaporation of water from the juice in indirect contact heat exchanger (1d) results in a thick juice (8), a vapour stream (6d) and a condensate (7d).

At least part of the vapour stream (6c) produced in indirect contact heat exchanger (1c) is supplied to a system of two thermal vapour compressors (10a) and (10b) connected in parallel via valves (11a) and (11b). This part of the vapour stream (6c) that is supplied to the thermal vapour compressors is the suction steam. Via valves (11a) and (11b), the suction steam can be distributed over the thermal vapour compressors (10a) and (10b). The suction steam is recompressed with motive steam (13) in the thermal vapour compressors (10a) and (10b) to obtain thermally recompressed vapour (4b). Via valves (14a) and (14b), the motive steam can be distributed over the thermal vapour compressors (10a) and (10b).

Injection water (16) can be supplied to steam coolers (15a) and (15b) via valves (17a) and (17b) to obtain thermally recompressed vapour (4b) with a reduced temperature. The thermally recompressed vapour (4b) is added to steam (4a) to provide additional heat for evaporation in the indirect contact heat exchanger (1a).

The Brix value of the thick juice (8) can be lowered by adding thin juice (5) via valve (18).

It is within the skills of the artisan to extend this interconnection of two thermal vapour compressors to three of more thermal vapour compressors.

**Example 2**

Figure 3 schematically depicts a diagram of entrainment ratio $\dot{M}_0/\dot{M}_1$, scaled by the maximum entrainment ratio $(\dot{M}_0/\dot{M}_1)_{max}$, versus suction steam mass flow rate $\dot{M}_o$, scaled by the cumulative maximum suction steam mass flow rate of all thermal vapour recompressors $\dot{M}_{0,max}$, for four commercially available Körting thermal vapour recompressors connected in parallel, wherein a first thermal vapour recompressor has 10% of the total thermal vapour recompression capacity, a second thermal vapour recompressor has 10% of the total thermal vapour recompression capacity, a third thermal vapour recompressor has 30% of the total thermal vapour recompression capacity and a fourth thermal vapour recompressor has 50% of the total thermal vapour recompression capacity. $\dot{M}_1$ represents the motive steam mass flow rate. The total thermal vapour recompression capacity is the cumulative maximum suction steam mass flow rate $\dot{M}_{0,\max}$ of all thermal vapour recompressors. It is assumed that all four thermal vapour recompressors have an identical maximum entrainment ratio.

The amount of suction steam can be distributed over the four thermal vapour recompressors in 11 different ways.

It can be inferred from Figure 3 that thermal recompression can take place at relatively high entrainment ratios over the whole range of possible (normalized) suction steam mass flow rates.

**Example 3**

Figure 4 schematically depicts a diagram of entrainment ratio $\dot{M}_0/\dot{M}_1$, scaled by the maximum entrainment ratio, versus suction steam mass flow rate $\dot{M}_0$, scaled by the cumulative maximum suction steam mass flow rate of all thermal vapour recompressors, for four commercially available Körting thermal vapour recompressors connected in parallel, wherein a first thermal vapour recompressor has 6.7 % of the total thermal vapour recompression capacity, a second thermal vapour recompressor has 13.3 % of the total thermal vapour recompression capacity, a third thermal vapour recompressor has 26.7 % of the total thermal vapour recompression capacity and a fourth thermal vapour recompressor has 53.3 % of the total thermal vapour recompression capacity. $\dot{M}_1$ represents the motive steam mass flow rate. The total thermal vapour recompression capacity is the cumulative maximum suction steam mass flow rate of all thermal vapour recompressors. It is assumed that all four thermal vapour recompressors have an identical maximum entrainment ratio.

The amount of suction steam can be distributed over the four thermal vapour recompressors in 16 different ways.

It can be inferred from Figure 4 that thermal recompression can take place at relatively high entrainment ratios over the whole range of possible (normalized) suction steam mass flow rates. Even better (normalized) entrainments ratios are obtained than in Example 2.

**Claims**

1. A process for the manufacture of a thick juice having a Brix value of between 65 and 80 °Bx by evaporative concentration of thin juice of sugar beet, sugar cane, or combinations thereof, said process comprising:

(i) providing a thin juice of sugar beet, sugar cane, or combinations thereof, said thin juice having a Brix value of between 10 and 25 °Bx;
(ii) subjecting the thin juice to multiple-effect evaporation in $n$ serial evaporators, wherein n is an integer ranging from 3 to 10,

wherein each evaporator is characterized from the steam/vapor flow by $x$, $x$ being an integer ranging from 1 to $n$, and from the juice flow by $y$, $y$ being an integer ranging from 1 to $n$,
wherein each evaporator comprises a cavity for holding the juice to be concentrated and a heat exchange element for heating the juice to be concentrated,
wherein steam is fed to the heat exchange element of evaporator $x=1$, wherein for every evaporator $x=1$ to $x=n$-1 at least part of the water vapour resulting from evaporation in evaporator $x$ is fed to the heat exchange element of $x+1$,
wherein the thin juice of (i) is fed to the cavity of evaporator $y=1$,
wherein for every evaporator $y=1$ to $y=n$-1 at least part of the juice resulting from evaporation in evaporator $y$ is fed to the cavity of evaporator $y+1$, wherein the juice resulting from evaporation in evaporator $y=n$ is the thick juice having a Brix value of between 65 and 80 °Bx, and
wherein at least one interconnection for transporting the vapour from the cavity of an evaporator to the heat exchange element of another evaporator allows to redirect at least part of the vapour to two or more thermal vapour recompressors operated in parallel, said combined two or more thermal vapour recompressors having an effective total thermal vapour recompressor capacity;

(iii) monitoring the Brix value of the juice in any one of the evaporators **characterized by** $y>1$, preferably monitoring the Brix value of the juice of evaporator $y=n$, and determining the difference between said Brix value and a setpoint;
(iv) reducing, and preferably minimizing, the difference of (iii) by adapting the effective total thermal vapour recompressor capacity,
(v) optionally adding the thermally recompressed vapour of (iv) to a steam cooler and injecting water to the cooler to obtain thermally recompressed vapour with a reduced temperature;
(vi) feeding the thermally recompressed vapour of (iv), or optionally the thermally recompressed vapour having reduced temperature of (v), to the heat exchange element of evaporator 1 or 2 for heating the thin juice to be concentrated;

(vii) discharging the thick juice from the cavity of evaporator $y=n$; and

(viii) optionally adjusting the Brix value of the thick juice obtained in (vii) to the required value of between 65 and 80 °Bx by diluting the thick juice with thin juice of sugar beet, sugar cane, or combinations thereof, said thin juice having a Brix value of between 10 and 25 °Bx.

2. The process according to claim 1, wherein the thin juice of (i) is fed to the cavity of evaporator $x=1$ and wherein the partially concentrated juice resulting from evaporation in evaporator $x$ is fed to evaporator $x+1$.

3. The process according to claim 1 or 2, wherein thick juice obtained has a Brix value of between 70 and 72 °Bx, and wherein the thin juice provided in (i) has a Brix value of between 16 and 18 °Bx.

4. The process according to claim 1 or 2, wherein the thick juice has a Brix value between 65 and 80 °Bx, and the thin juice provided in (i) has a Brix value of between 10 and 22 °Bx, wherein in (iv) the setpoint for the Brix value of thick juice after evaporator $y=n$ is set 0.1 to 2 % higher, preferably between 0.2 and 1% higher, than the Brix value of between 65 and 80 °Bx, and wherein in (viii) the Brix value of the thick juice obtained in (vii) is adjusted to the required value of between 65 and 78 °Bx by diluting the thick juice with thin juice as defined in (i).

5. The process according to claim 1 or 2, wherein the thick juice has a Brix value of between 70 and 72 °Bx, wherein the thin juice provided in (i) has a Brix value of between 16 and 18 °Bx, wherein in (iv) the adaptation of the effective total thermal vapour recompressor capacity is calculated based on a Brix value of the thick juice after evaporator n that is 0.1 to 2 % higher, preferably between 0.2 and 1% higher, than the Brix value of between 70 and 72 °Bx, and wherein in (viii) the Brix value of the thick juice obtained in step (vii) is adjusted to the required value of between 70 and 72 °Bx by diluting the thick juice with thin juice as defined in step (i).

6. The process according to any one of claims 1-5, wherein two thermal vapour recompressors connected in parallel are applied, wherein:

(a) a first thermal vapour recompressor has between 20 and 50 % of the total thermal vapour recompressor capacity; and
(b) a second thermal vapour recompressor has between 50 and 80 % of the total thermal vapour recompressor capacity.

7. The process according to any one of claims 1-5, wherein three thermal vapour recompressors connected in parallel are applied, wherein:

(a) a first thermal vapour recompressor has between 10 and 35 % of the total thermal vapour recompressor capacity;
(b) a second thermal vapour recompressor has between 10 and 35 % of the total thermal vapour recompressor capacity; and
(c) a third thermal vapour recompressor has between 40 and 70 % of the total thermal vapour recompressor capacity.

8. The process according to any one of claims 1-5, wherein four thermal vapour recompressors connected in parallel are applied, wherein:

(a) a first thermal vapour recompressor has between 5 and 15 % of the total thermal vapour recompressor capacity;
(b) a second thermal vapour recompressor has between 5 and 15 % of the total thermal vapour recompressor capacity;
(c) a third thermal vapour recompressor has between 20 and 40 % of the total thermal vapour recompressor capacity, and
(d) a fourth thermal vapour recompressor has between 40 and 60 % of the total thermal vapour recompressor capacity.

9. The process according to any one of claims 1-8, wherein the thermally recompressed vapour of (ii) is mixed with injected water in a steam cooler to obtain thermally recompressed vapour with a reduced temperature of between 125 and 150°C.

10. The process according to any one of claims 1-9, wherein $n$ = 5, 6, 7 or 8, preferably 7.

11. The process according to any one of claims 1-10, wherein in (ii), part of the water vapour resulting from evaporation in evaporator $x$ = 1, 2 or 3, preferably evaporator $x$ = 3 is subjected to thermal vapour recompression.

12. The process according to any one of claims 1-11, wherein in (vi), the thermally recompressed vapour is fed to the heat exchange element of evaporator $x$ = 1 for heating the thin juice to be concentrated.

13. The process according to any one of claims 1-12, wherein the evaporators are chosen from falling film tube or plate evaporators, rising film tube or plate evaporators or Robert evaporators, wherein the evaporators preferably are falling film plate evaporators.

14. Use of two or more thermal vapour recompressors connected in parallel in a process for the manufacture of thick juice by evaporative concentration of thin juice of sugar beet, sugar cane, or combinations thereof, using multiple-effect evaporation in $n$ serial evaporators,

wherein $n$ is an integer ranging from 3 to 10, wherein at least part of the water vapour obtained from evaporation in one or more of the evaporators 1 to $n$ is subjected to thermal vapour recompression using motive steam, and wherein the thermally recompressed vapour is used for heating the juice to be concentrated in evaporator 1 or 2, for:

(a) reducing condenser loss or reaching zero condenser loss;
(b) efficiently using motive steam in the two or more thermal vapour recompressors;
(c) obtaining a thick juice with a predetermined Brix value irrespective of process fluctuations and fluctuations in the Brix value of the thin juice and/or fluctuating vapour demand process; or
(d) a combination of (a), (b) and/or (c).

15. Sugar manufacturing installation comprising two or more thermal vapor recompressors operated in parallel which are in fluid connection with a multiple-effect evaporation installation having n serial evaporators, wherein n is an integer ranging from 3 to 10.

**Patentansprüche**

1. Verfahren zur Herstellung eines dickflüssigen Safts, der einen Brix-Wert zwischen 65 und 80 °Bx aufweist, durch eine Verdampfungskonzentration eines dünnflüssigen Safts von Zuckerrübe, Zuckerrohr oder Kombinationen davon, wobei das Verfahren umfasst:

(i) Bereitstellen eines dünnflüssigen Safts von Zuckerrübe, Zuckerrohr oder Kombinationen davon, wobei der dünnflüssige Saft einen Brix-Wert zwischen 10 und 25 °Bx aufweist;
(ii) Unterziehen des dünnflüssigen Safts einer mehrfachwirkenden Verdampfung in $n$ seriell angeordneten Verdampfern, wobei $n$ eine ganze Zahl zwischen 3 und 10 ist,

wobei jeder Verdampfer durch die Wasserdampf/Dampf-Strömung durch $x$ charakterisiert ist, wobei $x$ eine ganze Zahl zwischen 1 und $n$ ist, und durch die Saft-Strömung durch $y$, wobei $y$ eine ganze Zahl von 1 bis $n$ ist,

wobei jeder Verdampfer eine Kavität zum Aufbewahren des zu konzentrierenden Safts und ein Wärmetauschelement zum Erwärmen des zu konzentrierenden Safts umfasst,
wobei Wasserdampf zu dem Wärmetauschelement von Verdampfer $x = 1$ gespeist wird,
wobei für jeden Verdampfer $x = 1$ bis x = $n$-1 zumindest ein Teil des Wasserdampfs, der von einer Verdampfung in Verdampfer $x$ resultiert, zu dem Wärmetauschelement $x+1$ gespeist wird,
wobei der dünnflüssige Saft aus (i) zu der Kavität von Verdampfer $y = 1$ gespeist wird,
wobei für jeden Verdampfer $y = 1$ bis y = $n$-1 zumindest ein Teil des Safts, der von einer Verdampfung in Verdampfer y resultiert, zu der Kavität von Verdampfer $y+1$ gespeist wird,
wobei der Saft, der von einer Verdampfung in Verdampfer $y = n$ resultiert, der dickflüssige Saft ist, der einen Brix-Wert zwischen 65 und 80 °Bx aufweist, und
wobei zumindest eine Verbindung zum Transportieren des Dampfs von der Kavität eines Verdampfers zu dem Wärmetauschelement eines anderen Verdampfers es erlaubt, zumindest einen Teil des Dampfes zu zwei oder mehr thermischen Dampfrekompressoren umzuleiten, die parallel betrieben werden, wobei die kombinierten zwei oder mehr thermischen Dampfrekompressoren eine effektive totale thermische Dampfrekompressorkapazität aufweisen;

(iii) Überwachen des Brix-Werts des Safts in einem der Verdampfer, der durch $y > 1$ charakterisiert ist, vorzugsweise Überwachen des Brix-Werts des Safts von Verdampfer $y = n$, und Bestimmen der Differenz zwischen dem Brix-Wert und einem Sollwert;
(iv) Reduzieren, und vorzugsweise Minimieren, der Differenz von (iii) durch ein Adaptieren der effektiven totalen thermischen Dampfrekompressorkapazität,
(v) optional Hinzufügen des thermisch rekomprimierten Dampfes von (iv) zu einem Wasserdampfkühler und Injizieren von Wasser zu dem Kühler, um thermisch rekomprimierten Dampf mit einer reduzierten Temperatur zu erhalten;
(vi) Speisen des thermisch rekomprimierten Dampfes von (iv), oder optional des thermisch rekomprimierten Dampfes mit einer reduzierten Temperatur von (v), zu dem Wärmetauschelement von Verdampfer 1 oder 2 zum Erwärmen des zu konzentrierenden dünnflüssigen Safts;
(vii) Ablassen des dickflüssigen Safts von der Kavität von Verdampfer $y = n$; und

(viii) optional Anpassen des Brix-Werts des in (vii) erhaltenen dickflüssigen Safts zu dem erforderlichen Wert zwischen 65 und 80 °Bx durch ein Verdünnen des dickflüssigen Safts mit dünnflüssigem Saft von Zuckerrübe, Zuckerrohr oder Kombinationen davon, wobei der dünnflüssige Saft einen Brix-Wert zwischen 10 und 25 °Bx aufweist.

2. Verfahren nach Anspruch 1, wobei der dünnflüssige Saft von (i) zu der Kavität von Verdampfer $x = 1$ gespeist wird und wobei der teilweise konzentrierte Saft, der von einer Verdampfung in Verdampfer $x$ resultiert, zu dem Verdampfer $x+1$ gespeist wird.

3. Verfahren nach Anspruch 1 oder 2, wobei ein erhaltener dickflüssiger Saft einen Brix-Wert zwischen 70 und 72 °Bx aufweist, und wobei der in (i) bereitgestellte dünnflüssige Saft einen Brix-Wert zwischen 16 und 18 °Bx aufweist.

4. Verfahren nach Anspruch 1 oder 2, wobei der dickflüssige Saft einen Brix-Wert zwischen 65 und 80 °Bx aufweist, und der in (i) bereitgestellte dünnflüssige Saft einen Brix-Wert zwischen 10 und 22 °Bx aufweist, wobei in (iv) der Sollwert für den Brix-Wert von einem dickflüssigen Saft nach Verdampfer $y = n$ 0.1 bis 2% höher, vorzugsweise zwischen 0.2 und 1% höher, eingestellt wird als der Brix-Wert zwischen 65 und 80 °Bx, und wobei in (viii) der Brix-Wert des in (vii) erhaltenen dickflüssigen Safts an den erforderlichen Wert zwischen 65 und 78 °Bx angepasst wird durch ein Verdünnen des dickflüssigen Safts mit, wie in (i) definiertem, dünnflüssigem Saft.

5. Verfahren nach Anspruch 1 oder 2, wobei der dickflüssige Saft einen Brix-Wert zwischen 70 und 72 °Bx aufweist, wobei der in (i) bereitgestellte dünnflüssige Saft einen Brix-Wert zwischen 16 und 18 °Bx aufweist, wobei in (iv) die Anpassung der effektiven totalen thermischen Dampfrekompressorkapazität berechnet wird basierend auf einem Brix-Wert des dickflüssigen Safts nach Verdampfer $n$, der 0.1 bis 2% höher ist, vorzugsweise zwischen 0.2 und 1% höher ist als der Brix-Wert zwischen 70 und 72 °Bx, und wobei in (viii) der Brix-Wert des in Schritt (vii) erhaltenen dickflüssigen Safts an den erforderlichen Wert zwischen 70 und 72 °Bx angepasst wird durch ein Verdünnen des dickflüssigen Safts mit, wie in Schritt (i) definiertem, dünnflüssigem Saft.

6. Verfahren nach einem der Ansprüche 1 bis 5, wobei zwei thermische Dampfrekompressoren, die parallel verbunden sind, eingesetzt werden, wobei:

(a) ein erster thermischer Dampfrekompressor zwischen 20 und 50% der totalen thermischen Dampfrekompressorkapazität aufweist; und

(b) ein zweiter thermischer Dampfrekompressor zwischen 50 und 80% der totalen thermischen Dampfrekompressorkapazität aufweist.

7. Verfahren nach einem der Ansprüche 1 bis 5, wobei drei thermische Dampfrekompressoren, die parallel verbunden sind, eingesetzt werden, wobei:

(a) ein erster thermischer Dampfrekompressor zwischen 10 und 35% der totalen thermischen Dampfrekompressorkapazität aufweist;
(b) ein zweiter thermischer Dampfrekompressor zwischen 10 und 35% der totalen thermischen Dampfrekompressorkapazität aufweist; und
(c) ein dritter thermischer Dampfrekompressor zwischen 40 und 70% der totalen thermischen Dampfrekompressorkapazität aufweist.

8. Verfahren nach einem der Ansprüche 1 bis 5, wobei vier thermische Dampfrekompressoren, die parallel verbunden sind, eingesetzt werden, wobei:

(a) ein erster thermischer Dampfrekompressor zwischen 5 und 15% der totalen thermischen Dampfrekompressorkapazität aufweist;
(b) ein zweiter thermischer Dampfrekompressor zwischen 5 und 15% der totalen thermischen Dampfrekompressorkapazität aufweist;
(c) ein dritter thermischer Dampfrekompressor zwischen 20 und 40% der totalen thermischen Dampfrekompressorkapazität aufweist; und
(c) ein vierter thermischer Dampfrekompressor zwischen 40 und 60% der totalen thermischen Dampfrekompressorkapazität aufweist.

9. Verfahren nach einem der Ansprüche 1 bis 8, wobei der thermisch rekomprimierte Dampf aus (ii) mit injiziertem Wasser in einem Wasserdampfkühler vermischt wird, um thermisch rekomprimierten Dampf mit einer reduzierten Temperatur zwischen 125 und 150 °C zu erhalten.

10. Verfahren nach einem der Ansprüche 1 bis 9, wobei $n = 5, 6, 7$ oder 8, vorzugsweise 7.

11. Verfahren nach einem der Ansprüche 1 bis 10, wobei in (ii), ein Teil des Wasserdampfs, der von einer Verdampfung in Verdampfer $x = 1, 2$ oder 3, resultiert, vorzugsweise Verdampfer $x = 3$, einer thermischen Dampfrekompression unterzogen wird.

12. Verfahren nach einem der Ansprüche 1 bis 11, wobei in (vi) der thermisch rekomprimierte Dampf zu dem Wärmetauschelement von Verdampfer $x = 1$ zum Erwärmen des zu konzentrierenden dünnflüssigen Safts gespeist wird.

**13.** Verfahren nach einem der Ansprüche 1 bis 12, wobei die Verdampfer ausgewählt sind aus Schlauch- oder Plattenfallfilmverdampfern, Schlauch- oder Plattensteigfilmverdampfern oder Robert-Verdampfern, wobei die Verdampfer vorzugsweise Plattenfallfilmverdampfer sind.

**14.** Verwendung von zwei oder mehr thermischen Dampfrekompressoren, die parallel verbunden sind, in einem Verfahren zur Herstellung eines dickflüssigen Safts durch eine Verdampfungskonzentration eines dünnflüssigen Safts von Zuckerrübe, Zuckerrohr oder Kombinationen davon, unter Verwendung einer mehrfachwirkenden Verdampfung in n seriell angeordneten Verdampfern,

wobei n eine ganze Zahl zwischen 3 und 10 ist, wobei zumindest ein Teil des Wasserdampfs, der von einer Verdampfung in einem oder mehreren der Verdampfer 1 bis n erhalten wird, einer thermischen Dampfrekompression unter Verwendung von Treibwasserdampf unterzogen wird, und wobei der thermisch rekomprimierte Dampf für eine Erwärmung des zu konzentrierenden Safts in Verdampfer 1 oder 2 verwendet wird zum:

(a) Reduzieren eines Kondensatorverlusts oder Erreichen von null Kondensatorverlust;
(b) effizienten Verwenden von Treibwasserdampf in den zwei oder mehr thermischen Dampfrekompressoren;
(c) Erhalten eines dickflüssigen Safts mit einem vorbestimmten Brix-Wert, unabhängig von Verfahrensfluktuationen und Fluktuationen in dem Brix-Wert des dünnflüssigen Safts und/oder von einem fluktuierenden Dampfbedarfsverfahren; oder
(d) Eine Kombination aus (a), (b) und/oder (c).

**15.** Zuckerherstellungsanlage, umfassend zwei oder mehr thermische Dampfrekompressoren, die parallel betrieben werden, die in einer Flüssigkeitsverbindung mit einer mehrfachwirkenden Verdampfungsanlage mit *n* seriell angeordneten Verdampfern steht, wobei n eine ganze Zahl zwischen 3 und 10 ist.

**Revendications**

**1.** Procédé de fabrication d'un jus épais présentant une valeur Brix comprise entre 65 et 80 °Bx par concentration par évaporation de jus mince de betterave à sucre, de canne à sucre ou de combinaisons de celles-ci, ledit procédé comprenant les étapes consistant à :

(i) fournir un jus mince de betterave à sucre, de canne à sucre ou de combinaisons de celles-ci, ledit jus mince présentant une valeur Brix comprise entre 10 et 25 °Bx ;
(ii) soumettre le jus mince à une évaporation à effets multiples dans *n* évaporateurs en série, dans lequel *n* est un nombre entier allant de 3 à 10,

dans lequel chaque évaporateur est caractérisé à partir du flux de vapeur/buée par *x*, x étant un nombre entier dans la plage de 1 à *n*, et à partir du flux de jus par *y, y* étant un nombre entier dans la plage de 1 à *n*, dans lequel chaque évaporateur comprend une cavité pour contenir le jus à concentrer et un élément d'échange de chaleur pour chauffer le jus à concentrer, dans lequel de la vapeur est alimentée vers l'élément d'échange de chaleur de l'évaporateur *x*=1, dans lequel pour chaque évaporateur *x*=1 à *x*= *n*-1, au moins une partie de la vapeur d'eau résultant de l'évaporation dans l'évaporateur *x* est alimentée vers l'élément d'échange de chaleur de *x*+1, dans lequel le jus mince de (i) est alimenté à la cavité de l'évaporateur *y*=1, dans lequel pour chaque évaporateur *y*=1 à *y*=*n*-1, au moins une partie du jus résultant de l'évaporation dans l'évaporateur *y* est alimentée vers la cavité de l'évaporateur *y*+1, dans lequel le jus résultant de l'évaporation dans l'évaporateur *y*=*n* est le jus épais présentant une valeur Brix comprise entre 65 et 80 °Bx, et

dans lequel au moins une interconnexion pour transporter la vapeur de la cavité d'un évaporateur vers l'élément d'échange de chaleur d'un autre évaporateur permet de rediriger au moins une partie de la vapeur vers deux recompresseurs de vapeur thermique ou plus fonctionnant en parallèle, lesdits deux recompresseurs de vapeur thermique ou plus combinés présentant une capacité totale effective de recompresseur de vapeur thermique ;

(iii) surveiller la valeur Brix du jus dans l'un quelconque des évaporateurs **caractérisés par** *y*>1, de préférence surveiller la valeur Brix du jus de l'évaporateur *y*=*n,* et déterminer la différence entre ladite valeur Brix et un point de consigne ;
(iv) réduire, et de préférence minimiser, la différence de (iii) en adaptant la capacité totale effective de recompresseur de vapeur thermique,
(v) facultativement ajouter la vapeur recomprimée thermiquement de (iv) à un refroidisseur à vapeur et injecter de l'eau dans le refroidisseur pour obtenir de la vapeur recomprimée thermiquement avec une température réduite ;

(vi) alimenter la vapeur recomprimée thermiquement de (iv), ou facultativement la vapeur recomprimée thermiquement présentant une température réduite de (v), vers l'élément d'échange de chaleur de l'évaporateur 1 ou 2 pour chauffer le jus mince à concentrer ;

(vii) évacuer le jus épais à partir de la cavité de l'évaporateur $y=n$ ; et

(viii) ajuster facultativement la valeur Brix du jus épais obtenu en (vii) à la valeur requise comprise entre 65 et 80 °Bx en diluant le jus épais avec du jus mince de betterave à sucre, de canne à sucre, ou de combinaisons de celles-ci, ledit jus mince présentant une valeur Brix comprise entre 10 et 25 °Bx.

2. Procédé selon la revendication 1, dans lequel le jus mince de (i) est alimenté dans la cavité de l'évaporateur $x=1$ et dans lequel le jus partiellement concentré résultant de l'évaporation dans l'évaporateur x est alimenté dans l'évaporateur x+1.

3. Procédé selon la revendication 1 ou 2, dans lequel le jus épais obtenu a une valeur Brix comprise entre 70 et 72 °Bx, et dans lequel le jus mince fourni en (i) a une valeur Brix comprise entre 16 et 18 °Bx.

4. Procédé selon la revendication 1 ou 2, dans lequel le jus épais a une valeur Brix comprise entre 65 et 80 °Bx, et le jus mince fourni en (i) a une valeur Brix comprise entre 10 et 22 °Bx, dans lequel dans (iv), le point de consigne pour la valeur Brix du jus épais après l'évaporateur $y=n$ est réglée de 0,1 à 2 % plus élevée, de préférence entre 0,2 et 1 % plus élevée, que la valeur Brix comprise entre 65 et 80 °Bx, et dans lequel dans (viii), la valeur Brix du jus épais obtenu en (vii) est ajustée à la valeur requise comprise entre 65 et 78 °Bx en diluant le jus épais avec le jus mince tel que défini en (i).

5. Procédé selon la revendication 1 ou 2, dans lequel le jus épais a une valeur Brix comprise entre 70 et 72 °Bx, dans lequel le jus mince fourni dans (i) a une valeur Brix comprise entre 16 et 18 °Bx, dans lequel dans (iv) l'adaptation de la capacité totale effective de recompresseur de vapeur thermique est calculée sur la base d'une valeur Brix du jus épais après l'évaporateur n qui est de 0,1 à 2 % plus élevée, de préférence entre 0,2 et 1% plus élevée, que la valeur Brix comprise entre 70 et 72 °Bx, et dans lequel dans (viii) la valeur Brix du jus épais obtenu dans l'étape (vii) est ajustée à la valeur requise comprise entre 70 et 72 °Bx en diluant le jus épais avec le jus mince tel que défini dans l'étape (i).

6. Procédé selon l'une quelconque des revendications 1 à 5, dans lequel deux recompresseurs de vapeur thermique connectés en parallèle sont appliqués, dans lequel :

(a) un premier recompresseur de vapeur thermique a entre 20 et 50 % de la capacité totale du recompresseur de vapeur thermique ; et

(b) un deuxième compresseur de vapeur thermique a une capacité comprise entre 50 et 80 % de la capacité totale du compresseur de vapeur thermique.

7. Procédé selon l'une quelconque des revendications 1 à 5, dans lequel trois recompresseurs de vapeur thermique connectés en parallèle sont appliqués, dans lequel :

(a) un premier recompresseur de vapeur thermique a entre 10 et 35 % de la capacité totale du recompresseur de vapeur thermique ;

(b) un deuxième compresseur de vapeur thermique a une capacité comprise entre 10 et 35 % de la capacité totale du compresseur de vapeur thermique ; et

(c) un troisième recompresseur de vapeur thermique a entre 40 et 70 % de la capacité totale du recompresseur de vapeur thermique.

8. Procédé selon l'une quelconque des revendications 1 à 5, dans lequel quatre recompresseurs de vapeur thermique connectés en parallèle sont appliqués, dans lequel :

(a) un premier recompresseur de vapeur thermique a entre 5 et 15 % de la capacité totale du recompresseur de vapeur thermique ;

(b) un deuxième recompresseur de vapeur thermique a entre 5 et 15 % de la capacité totale du recompresseur de vapeur thermique ;

(c) un troisième recompresseur de vapeur thermique a entre 20 et 40 % de la capacité totale du recompresseur de vapeur thermique, et

(d) un quatrième recompresseur de vapeur thermique a entre 40 et 60 % de la capacité totale du recompresseur de vapeur thermique.

9. Procédé selon l'une quelconque des revendications 1 à 8, dans lequel la vapeur recomprimée thermiquement de (ii) est mélangée avec de l'eau injectée dans un refroidisseur à vapeur pour obtenir de la vapeur recomprimée thermiquement avec une température réduite comprise entre 125 et 150°C.

10. Procédé selon l'une quelconque des revendications 1 à 9, dans lequel $n$ = 5, 6, 7 ou 8, de préférence 7.

11. Procédé selon l'une quelconque des revendications 1 à 10, dans lequel dans (ii), une partie de la vapeur d'eau résultant de l'évaporation dans l'évaporateur $x = 1$, 2 ou 3, de préférence l'évaporateur $x = 3$, est soumise à une recompression de vapeur thermique.

12. Procédé selon l'une quelconque des revendications 1 à 11, dans lequel dans (vi), la vapeur recomprimée thermiquement est envoyée à l'élément d'échange de chaleur de l'évaporateur $x = 1$ pour chauffer le jus mince à concentrer.

13. Procédé selon l'une quelconque des revendications 1 à 12, dans lequel les évaporateurs sont choisis parmi des évaporateurs à tubes ou plaques à film tombant, des évaporateurs à tubes ou plaques à film montant ou des évaporateurs Robert, dans lequel les évaporateurs sont de préférence des évaporateurs à plaques à film tombant.

14. Utilisation de deux recompresseurs de vapeur thermique connectés en parallèle ou plus dans un procédé de fabrication de jus épais par concentration par évaporation de jus mince de betterave à sucre, de canne à sucre ou de combinaisons de celles-ci, en utilisant une évaporation à effets multiples dans $n$ évaporateurs en série,

dans laquelle $n$ est un entier compris entre 3 et 10,

dans lequel au moins une partie de la vapeur d'eau obtenue par évaporation dans un ou plusieurs des évaporateurs 1 à $n$ est soumise à une recompression de vapeur thermique en utilisant de la vapeur motrice, et

dans lequel la vapeur recomprimée thermiquement est utilisée pour chauffer le jus à concentrer dans l'évaporateur 1 ou 2, pour :

(a) réduire la perte du condenseur ou atteindre zéro perte du condenseur ;
(b) utiliser efficacement la vapeur d'eau dans les deux recompresseurs de vapeur thermique ou plus ;
(c) obtenir un jus épais avec une valeur Brix prédéterminée indépendamment des fluctuations du procédé et des fluctuations de la valeur Brix du jus mince et/ou du procédé de demande de vapeur fluctuante ; ou
(d) une combinaison de (a), (b) et/ou (c).

15. Installation de fabrication de sucre comprenant deux recompresseurs de vapeur thermique ou plus fonctionnant en parallèle qui sont en connexion fluidique avec une installation d'évaporation à effets multiples présentant $n$ évaporateurs en série, dans laquelle $n$ est un entier dans la plage de 3 à 10.

## Fig 1a

## Fig 1b

*Fig 2*

*Fig 3*

Fig 4

**EP 3 647 439 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 367MUM2005
- US 4119436 A
- US 2005260313 A1
- US 4530737 A